# FASCICULE DE BREVET EUROPEEN

(11) **EP 1 349 463 B1**
(45) Date de publication et mention de la délivrance du brevet: **27.08.2008**
(21) Numéro de dépôt: 02710079.1
(22) Date de dépôt: 03.01.2002
(51) Int. Cl.: A41D 19/00, B29D 31/00

(54) **GANT DE PROTECTION A RESISTANCE MECANIQUE RENFORCEE ET SON PROCEDE DE FABRICATION**
SCHUTZHANDSCHUH MIT EINER VERSTÄRKTEN MECHANISCHEN FESTIGKEIT UND VERFAHREN ZU DESSEN HERSTELLUNG
PROTECTIVE GLOVE WITH REINFORCED MECHANICAL STRENGTH AND METHOD FOR MAKING SAME

(30) Priorité: 08.01.2001 FR 0100171
(43) Date de publication de la demande: 08.10.2003
(73) Titulaire: HUTCHINSON, 75008 Paris (FR)
(72) Inventeur: HERBERT, Pascal, F-60126 RIVECOURT (FR); LEFEBVRE, Nathalie, F-60190 EPINEUSE (FR)
(74) Mandataire: Corizzi, Valérie
(86) Numéro de dépôt international: PCT/FR2002/000010
(87) Numéro de publication internationale: WO 2002/052964

(56) Documents cités:
- FR-A- 2 765 777
- FR-A- 2 776 168
- US-A- 4 190 685
- US-A- 5 568 657

## Description

La présente invention se rapporte à un gant à résistance mécanique renforcée, à son procédé de fabrication, ainsi qu'aux utilisations d'un tel gant.

La manipulation d'objets, d'outils ou d'appareillages coupants ou présentant des aspérités nécessite une protection efficace des mains de l'utilisateur par le port de gants. Des textiles à haute résistance mécanique, tels que ceux constitués par des fibres KEVLAR^{®} ou par des fibres DYNEEMA^{®} (société DSM), constituent des matériaux particulièrement appropriés à la réalisation de tels gants.

Dans le but de rendre ces textiles imperméables et de protéger leurs fibres du milieu extérieur (eau, huiles, agents chimiques divers), il est nécessaire d'enduire la face externe des gants par un matériau protecteur, tel qu'un élastomère.

A cet effet, le Brevet EP 0 716 817 au nom de la société HUTCHINSON décrit des gants de haute protection contre les risques de coupure qui comprennent, sur la face du gant destinée à couvrir la paume de la main, un matériau de haute résistance à la coupure (tel qu'un tricot de fibres para-aramides), tandis que la face du gant destinée à couvrir le dos de la main est constituée par un textile élastique de fibres organiques naturelles ou synthétiques (tel qu'un tricot de fibres de coton), tout ou partie de la surface externe du gant étant enduite d'un élastomère.

Afin de protéger efficacement les mains de l'utilisateur, il serait souhaitable d'utiliser des élastomères qui, outre leur rôle d'imperméabilisation et de protection du textile du milieu extérieur, présentent de bonnes propriétés mécaniques, notamment du point de vue de la résistance à la perforation et à la déchirure. Dans cette optique, il serait plus avantageux d'utiliser des élastomères issus de solutions, qui peuvent présenter de meilleures propriétés mécaniques que lorsqu'ils sont issus de dispersions aqueuses (par exemple dans le cas de certains polyuréthannes). Par ailleurs, certains élastomères ne peuvent être mis en oeuvre que sous forme de solutions et ne sont donc pas disponibles sous forme de dispersions aqueuses, comme c'est le cas par exemple des caoutchouc butyles.

Or, le Brevet EP 0 716 817 ne décrit l'enduction d'un textile que par des élastomères sous forme de dispersions aqueuses, par trempages successifs du textile dans ces dispersions aqueuses. Comme cela est connu de l'Homme de l'art, le trempage direct d'un textile dans une solution d'élastomère est en effet à prohiber, puisqu'il impliquerait, eu égard au fort pouvoir pénétrant des solutions d'élastomère, une inclusion complète du textile (sur toute son épaisseur) dans l'élastomère. Ceci résulterait en une perte de la souplesse du textile. Les gants ainsi obtenus seraient d'un port particulièrement inconfortable pour l'utilisateur, leur manque de souplesse les rendant impropres à suivre les mouvements de la main et des doigts.

Le document US-4,190,685 décrit un gant résistant aux produits chimiques. Il s'agit d'un article multicouches comportant un gabarit en tissu, une couche interne d'un élastomère et d'une couche externe d'un caoutchouc butyle.

Un but de l'invention est donc de pourvoir à un gant qui soit souple et qui présente une résistance mécanique élevée, en particulier en ce qui concerne la résistance à la perforation et à la déchirure, et dans lequel une couche de textile à haute résistance mécanique soit associée à des couches d'élastomères sélectionnés pour leurs bonnes propriétés mécaniques.

Ce but est atteint, d'une part, en utilisant des élastomères mis en oeuvre sous forme de solutions et, d'autre part, en intercalant une couche d'un élastomère sous forme de dispersion aqueuse entre la couche de textile et celle des élastomères issus de solutions.

L'invention a donc pour objet un gant à haute résistance mécanique qui comprend, de la face interne du gant vers la face externe :
- une couche de textile à haute résistance mécanique,
- ladite couche de textile étant recouverte, sur une partie ou sur la totalité de sa surface, par au moins une couche d'un élastomère obtenue à partir d'une dispersion aqueuse dudit élastomère,
- ladite couche d'élastomère étant recouverte, sur une partie ou sur la totalité de sa surface, par au moins une couche d'un élastomère obtenue à partir d'une solution dudit élastomère dans un ou plusieurs solvants organiques ou dans l'eau.

Au sens de la présente invention, on entend par « solution d'élastomère » un élastomère sous forme liquide se présentant en une seule phase continue, par opposition aux dispersions aqueuses d'élastomère (ou latex), qui se présentent, à un niveau microscopique, sous forme de deux phases distinctes. Les dispersions aqueuses d'élastomère utilisables dans le cadre de la présente invention sont des dispersions coagulables à l'aide des agents de coagulation couramment utilisés dans le domaine des élastomères, ou des dispersions aqueuses modifiées rhéologiquement de façon à augmenter leur viscosité.

Par « face interne du gant », on entend la face du gant destinée à venir en contact avec la main de l'utilisateur, alors que la « face externe » du gant est celle destinée à venir en contact avec le milieu extérieur.

Par « textile à haute résistance mécanique », on entend un textile présentant de bonnes résistances à la perforation et à la déchirure, appréciées selon la norme NF EN 388. En ce qui concerne le niveau de résistance à la coupure, il dépend de la nature du textile choisi, du diamètre des fibres et de la taille des mailles du textile, dans le cas où les fibres du textile sont tricotées.

Selon la norme NF EN 388, les niveaux de résistance à la perforation, à la coupure et à la déchirure font intervenir des caractéristiques mécaniques distinctes, puisqu'ils correspondent à la résistance à des sollicitations mécaniques de différents types, à savoir, respectivement, la résistance au contact avec un objet pointu, la résistance au contact avec un objet tranchant, et la capacité d'un échantillon présentant une entaille à ne pas se déchirer plus encore à partir de cette entaille.

Dans les gants conformes à l'invention, la présence d'au moins une couche d'un élastomère obtenue à partir d'une dispersion aqueuse dudit élastomère, en position intercalaire entre la couche de textile et la(les) couche(s) d'élastomère obtenues à partir de solutions, permet d'empêcher que l'élastomère sous forme de solution ne pénètre dans la totalité de l'épaisseur de la couche de textile. Ainsi, le gant résultant reste souple tout en étant imperméabilisé par des couches d'élastomère obtenues à partir de solutions.

Le textile à haute résistance mécanique utilisé dans les gants conformes à l'invention consiste par exemple en des fibres naturelles ou synthétiques, tissées ou tricotées, sélectionnées parmi les fibres de polyéthylène haute ténacité, de polyester haute ténacité, de polyaramide, de polyamide, de viscose et leurs mélanges.

De façon particulièrement avantageuse, l'élastomère obtenu à partir d'une dispersion aqueuse est sélectionné dans le groupe constitué par le caoutchouc naturel, les polychloroprènes, les caoutchoucs nitriles carboxylés, les polyuréthannes et leurs mélanges.

Quant à l'élastomère obtenu à partir d'une solution dans un ou plusieurs solvants organiques ou dans l'eau, il est avantageusement sélectionné dans le groupe constitué par les polyuréthannes, les caoutchoucs butyles, les polyéthylènes chlorosulfonés (par exemple le produit commercialisé sous la marque HYPALON^{®} par Du Pont De Nemours, France), les alcools polyvinyliques et leurs mélanges.

Ces exemples ne sont toutefois pas limitatifs : de façon générale, tout élastomère apte à être mis en solution dans un solvant organique ou dans l'eau et à former un film après évaporation du solvant pourrait être utilisé.

Selon un mode de réalisation avantageux du gant conforme à l'invention, ce dernier présente une haute résistance chimique, l'élastomère obtenu à partir d'une solution dans un ou plusieurs solvants organiques ou dans l'eau étant dans ce cas sélectionné dans le groupe constitué par les caoutchoucs butyles, les polyéthylènes chlorosulfonés, les alcools polyvinyliques et leurs mélanges.

Les caoutchoucs butyles permettent en effet d'obtenir un gant imperméable aux gaz, alors que les polyéthylènes chlorosulfonés et les alcools polyvinyliques confèrent au gant une excellente imperméabilité aux liquides (eau, huiles, solvants). Tout autre élastomère en solution présentant des propriétés de résistance chimique pourrait également être utilisé.

De façon générale, on entend par « gant à haute résistance chimique » un gant qui permet la manipulation de produits avec lesquels l'utilisateur doit éviter tous contacts, par exemple des produits agressifs pour la peau ou dont le contact est dangereux (agents chimiques corrosifs par exemple).

L'épaisseur totale des couches d'élastomère, dans le gant conforme à l'invention, peut être comprise entre 0,1 et 1 mm, de préférence entre 0,1 et 0,6 mm.

Le gant conforme à l'invention, quelle que soit la nature des couches élastomériques, présente avantageusement une résistance à la perforation d'au moins 150 N et une résistance à la déchirure pantalon d'au moins 75 N, mesurées selon la norme NF EN 388 (soit, selon cette norme, un niveau 4 de résistance à la perforation et à la déchirure pantalon).

L'invention a également pour objet un procédé de fabrication du gant tel que défini ci-dessus, caractérisé en ce qu'il comprend les étapes suivantes :
a) habillage d'un moule avec une couche de textile à haute résistance mécanique,
b) trempage de l'ensemble moule / textile à haute résistance mécanique dans une ou plusieurs dispersions aqueuses d'élastomères, identiques ou différents,
c) trempage de l'ensemble moule / textile à haute résistance mécanique / élastomère obtenu à l'issue de l'étape précédente dans une ou plusieurs solutions d'élastomères, identiques ou différents, dans un ou plusieurs solvants organiques ou dans l'eau, puis
d) retrait du gant par glissement sur le moule.

Dans ce procédé, les dispersions aqueuses d'élastomères, les solutions d'élastomère et le textile à haute résistance mécanique sont tels que définis ci-dessus en rapport avec le gant conforme à l'invention.

Entre les étapes b) et c) du procédé défini ci-dessus, on peut également effectuer une étape de réticulation de la couche d'élastomère obtenue à l'issue de l'étape b). En effet, la réticulation de l'élastomère permet avantageusement de renforcer sa résistance chimique vis-à-vis des solvants qui seront utilisés au cours de l'étape c).

Le procédé conforme à l'invention pallie les carences de l'art antérieur en ce qu'il permet de réaliser, par la technique du trempage d'un textile dans un bain d'élastomère, un gant souple comprenant un textile recouvert par des couches d'élastomère provenant de solutions desdits élastomères.

Jusqu'ici, aucune méthode qui permette d'associer un élastomère sous forme de solution à un textile, sans enrober la totalité des fibres du textile, n'était connue. La succession originale des étapes selon le procédé conforme à l'invention permet de limiter l'interpénétration entre l'élastomère sous forme de solution et le textile lorsque ces deux matériaux sont mis en contact, lors de l'étape c) du procédé. L'étape b) de trempage du textile dans un élastomère en dispersion aqueuse permet en effet d'imperméabiliser la surface du textile et de prévenir l'enrobage de la totalité des mailles du textile par l'élastomère en solution, lors de l'étape c) du procédé. Le textile reste donc souple et conserve ses propriétés mécaniques. Ceci permet d'obtenir un gant d'une grande souplesse et d'un port confortable, propriétés indispensables pour que l'utilisateur puisse effectuer des tâches minutieuses tout en conservant des gestes d'une grande précision.

Le procédé conforme à l'invention comprend avantageusement, entre les étapes a) et b), une étape a') d'immersion de l'ensemble moule / textile à haute résistance mécanique dans un bain d'agent coagulant, suivie d'un séchage partiel dudit ensemble. Des agents coagulants adaptés à des dispersions aqueuses d'élastomères sont bien connus de l'Homme de l'art.

Selon un mode de mise en oeuvre avantageux du procédé conforme à l'invention, ce dernier comprend, entre les étapes c) et d), une étape c') de séchage de l'ensemble moule / textile à haute résistance mécanique / élastomère obtenu à l'issue de l'étape c).

L'étape b) peut éventuellement ne comprendre qu'une seule opération de trempage de l'ensemble moule / textile à haute résistance mécanique dans une dispersion aqueuse d'élastomère.

Quant à l'étape c) du procédé conforme à l'invention, elle peut comprendre, en fonction de l'épaisseur finale d'élastomère souhaitée, entre 1 et 20, de préférence entre 1 et 8 opérations de trempage de l'ensemble moule / textile à haute résistance mécanique/ élastomère obtenu à l'issue de l'étape b) dans une ou plusieurs solutions d'élastomères, identiques ou différents, dans un ou plusieurs solvants organiques ou dans l'eau. Dans ce cas, chaque couche d'élastomère est séchée, au moins partiellement, avant d'effectuer l'opération de trempage suivante.

L'invention a également pour objet l'utilisation du gant défini ci-dessus pour la manipulation d'objets entraînant un risque de coupure, de perforation
ou de déchirure.

L'invention a, en outre, pour objet l'utilisation du gant à haute résistance mécanique et à haute résistance chimique défini ci-dessus pour la manipulation de produits chimiques dangereux, tels que des produits chimiques agressifs.

Outre les dispositions qui précèdent, l'invention comprend encore d'autres dispositions qui ressortiront de la description qui va suivre, qui se réfère à des exemples détaillés de fabrication de gants conformes à l'invention. Il doit être bien entendu, toutefois, que ces exemples sont donnés uniquement à titre d'illustration de l'objet de l'invention, dont ils ne constituent en aucune manière une limitation.

### EXEMPLE : Fabrication d'un gant conforme à l'invention à haute résistance mécanique.

Un gant conforme à l'invention comprenant une couche de textile à haute résistance mécanique recouverte par une couche de polyuréthanne obtenue à partir d'une dispersion aqueuse, puis par une couche de polyuréthanne obtenue à partir d'une solution dans un solvant organique, est obtenu par le procédé suivant.

On utilise un moule, classiquement en porcelaine, de la forme et aux dimensions d'une main. Ce moule est d'abord habillé par un textile à haute résistance mécanique, par exemple sur la partie du moule correspondant à la main de l'utilisateur ou sur la totalité de la surface du moule. Le textile à haute résistance mécanique utilisé ici est le DYNEEMA^{®} (textile de polyéthylène haute ténacité commercialisé par la société DSM).

L'ensemble moule / textile à haute résistance mécanique est immergé dans un bain d'agent coagulant, tel qu'un bain de nitrate de calcium. Il est partiellement séché, puis trempé dans une dispersion aqueuse d'un polyuréthanne, pendant 30 secondes à 3 minutes par exemple.

Il est bien entendu toutefois que le choix de l'élastomère en dispersion aqueuse doit se faire en fonction de celui de l'élastomère en solution qui sera utilisé ultérieurement, de façon à éviter que la couche d'élastomère obtenue à partir de la dispersion aqueuse ne soit attaquée ou ne réagisse avec le solvant de l'élastomère en solution.

Le trempage de l'ensemble moule / textile à haute résistance mécanique dans la dispersion aqueuse de polyuréthanne peut être effectué de manière à immerger la totalité du textile dans la dispersion aqueuse. Il peut également être effectué de manière à n'immerger qu'une partie du textile dans la dispersion aqueuse d'élastomère : par exemple, dans le cas où le textile est présent à la fois sur la partie du moule correspondant à la main de l'utilisateur et sur la partie du moule correspondant à son avant-bras, il est possible de n'immerger, dans la dispersion aqueuse d'élastomère, que la partie du textile correspondant à la main de l'utilisateur.

Cette opération permet de recouvrir la surface du textile à haute résistance mécanique par un film de polyuréthanne homogène, de très faible épaisseur (épaisseur négligeable devant l'épaisseur apparente de la couche de textile, qui est en général comprise entre 0,5 et 3 mm). Le fait que le polyuréthanne soit utilisé sous forme d'une dispersion aqueuse permet d'éviter la pénétration de l'élastomère dans la totalité de l'épaisseur du textile, puisque le polyuréthanne coagule à la surface du textile. Les mailles du textile sont donc imperméabilisées par l'élastomère sans être totalement inclues dans cet élastomère, le textile restant donc souple.

L'ensemble moule / textile à haute résistance mécanique polyuréthanne obtenu à l'issu de ces étapes est séché dans une étuve à une température comprise entre 20 et 100°C (de préférence de 70°C) et pendant un temps compris entre 5 et 60 minutes (de préférence pendant 30 minutes), la température et la durée choisies étant fonction du type de polyuréthanne utilisé.

On effectue ensuite plusieurs opérations de trempage du moule dans une solution de polyuréthanne dans un solvant organique, tel que le N,N-diméthylacétamide, la diméthylformamide ou le tétrahydrofuranne, ou dans un mélange de plusieurs solvants organiques. Le nombre d'opérations de trempage effectué est fonction de l'épaisseur de polyuréthanne souhaitée.

Tout polyuréthanne connu d'un Homme de l'art apte à être mis en solution dans un solvant organique et à former un film après évaporation du solvant pourrait être utilisé. A titre d'exemples, on peut citer un polyuréthanne de type polyester ou polyéther, aromatique ou aliphatique. Ces exemples ne sont toutefois pas limitatifs et, outre les caractéristiques de solubilité et les propriétés filmogènes décrites ci-dessus, tout polyuréthanne présentant un module à 20% d'allongement inférieur à 3 MPa, un module à 100% d'allongement inférieur à 7 MPa, une résistance à la rupture supérieure à 20 MPa et un allongement à la rupture supérieur à 400% pourrait être utilisé.

Lors de chaque opération de trempage, le moule est maintenu entre 3 et 30 minutes, de préférence 10 minutes, dans la solution de polyuréthanne. Chaque couche de polyuréthanne obtenue sur le moule est partiellement séchée, par exemple dans une étuve à une température comprise entre 20 et 130°C, de préférence de 60°C, et pendant un temps compris entre 1 et 300 minutes, de préférence de 60 minutes, avant de tremper à nouveau le moule dans la solution de polyuréthanne. Les températures et durées indiquées ici sont fonction du solvant du polyuréthanne et du type de polyuréthanne utilisés.

La couche de polyuréthanne ainsi obtenue sur le moule, après un ou plusieurs trempages du moule dans la solution de polyuréthanne, est ensuite complètement séchée, par exemple dans une étuve à une température comprise entre 20 et 130°C (de préférence de 80°C) et pendant un temps compris entre 2 et 24 heures (de préférence pendant 5 heures), la température et la durée choisies étant fonction du solvant et du type de polyuréthanne utilisés.

Après refroidissement, le gant est retiré du moule par glissement. On obtient un gant qui présente une excellente résistance à l'abrasion (résistance à l'abrasion de niveau 4 selon la norme NF EN 388) et qui est parfaitement étanche, au sens de la norme NF EN 374-2.

Dans l'exemple de fabrication d'un gant à haute résistance mécanique qui vient d'être décrit, il serait également possible d'utiliser d'autres élastomères que le polyuréthanne. Par exemple, à la place d'un polyuréthanne, il serait possible d'utiliser un élastomère en solution présentant des propriétés de résistance aux produits chimiques, tels que ceux qui ont été décrits ci-avant. On obtiendrait ainsi un gant à haute résistance mécanique et à haute résistance chimique.

De même, il serait possible de tremper successivement le moule dans plusieurs solutions d'élastomères différents et de cumuler ainsi les propriétés avantageuses de plusieurs élastomères. Ce serait le cas, par exemple, si l'on effectuait plusieurs trempages du moule dans une solution d'un caoutchouc butyle (élastomère imperméable aux gaz), puis plusieurs trempages du moule dans une solution d'un polyéthylène chlorosulfoné (élastomère imperméable aux liquides).

Ainsi que cela ressort de ce qui précède, l'invention ne se limite nullement à ceux de ses modes de mise en oeuvre, de réalisation et d'application qui viennent d'être décrits de façon plus explicite ; elle en embrasse au contraire toutes les variantes qui peuvent venir à l'esprit du technicien en la matière, sans s'écarter du cadre, ni de la portée, de la présente invention.

## Revendications

1. Gant qui comprend, de la face interne du gant vers la face externe :
- une couche de textile à haute résistance mécanique en fibres naturelles ou synthétiques, tissées ou tricotées,
- ladite couche de textile étant recouverte, sur une partie ou sur la totalité de sa surface, par au moins une couche d'un élastomère obtenue à partir d'une dispersion aqueuse dudit élastomère,
- ladite couche d'élastomère étant recouverte, sur une partie ou sur la totalité de sa surface, par au moins une couche d'un élastomère obtenue à partir d'une solution dudit élastomère dans un ou plusieurs solvants organiques ou dans l'eau,
**caractérisé en ce que** :
- ledit textile à haute résistance mécanique consiste en des fibres sélectionnées parmi les fibres de polyaramide, de polyamide, de viscose et leurs mélanges et le DYNEEMA^{™},
- ledit élastomère obtenu à partir d'une dispersion aqueuse est sélectionné dans le groupe constitué par les polyuréthannes,
- ledit élastomère obtenu à partir d'une solution dans un ou plusieurs solvants organiques ou dans l'eau est sélectionné dans le groupe constitué par les polyuréthannes.

2. Gant selon la revendication 1, **caractérisée en ce que** ledit élastomère obtenu à partir d'une solution dans un ou plusieurs solvants organiques ou dans l'eau est sélectionné parmi les polyuréthannes ayant un module à 20% d'allongement inférieur à 3 MPa, un module à 100% d'allongement inférieur à 7 MPa, une résistance à la rupture supérieure à 20 MPa et un allongement à la rupture supérieur à 400%.

3. Gant selon l'une quelconque des revendications 1 et 2, **caractérisé en ce qu'**il comporte en outre au moins une couche d'un élastomère obtenu à partir d'une solution dans un ou plusieurs solvants organiques ou dans l'eau sélectionné dans le groupe constitué par les caoutchoucs butyles, les polyéthylènes chlorosulfonés, les alcools polyvinyliques et leurs mélanges.

4. Gant selon l'une quelconque des revendications précédentes, **caractérisé en ce que** l'épaisseur totale des couches d'élastomère est comprise entre 0,1 et 1 mm, de préférence entre 0,1 et 0,6 mm.

5. Gant selon l'une quelconque des revendications précédentes, **caractérisé en ce qu'**il présente une résistance à la perforation mesurée selon la norme NF EN388 d'au moins 150 N.

6. Gant selon l'une quelconque des revendications précédentes, **caractérisé en ce qu'**il présente une résistance à la déchirure pantalon d'au moins 75 N mesurée selon la norme NF EN 388.

7. Gant selon l'une quelconque des revendications précédentes, **caractérisé en ce qu'**il présente une résistance à l'abrasion de niveau égal à 4 selon la norme NF EN 388.

8. Procédé de fabrication du gant tel que défini dans l'une quelconque des revendications précédentes, **caractérisé en ce qu'**il comprend les étapes suivantes :
a) habillage d'un moule avec une couche de textile à haute résistance mécanique en fibres naturelles ou synthétiques tissées ou tricotées,
b) trempage de l'ensemble moule / textile dans une ou plusieurs dispersions aqueuses d'élastomères de polyuréthane,
c) trempage de l'ensemble moule / textile / élastomère obtenu à l'issue de l'étape précédente dans une ou plusieurs solutions d'élastomères de polyuréthane dans un ou plusieurs solvants organiques ou dans l'eau, puis
d) retrait du gant par glissement sur le moule.

9. Procédé selon la revendication 8, **caractérisé en ce qu'**il comprend, entre les étapes a) et b), une étape a') d'immersion de l'ensemble moule / textile dans un bain d'agent coagulant, suivie d'un séchage partiel dudit ensemble.

10. Procédé selon la revendication 8 ou la revendication 9, **caractérisé en ce qu'**il comprend, entre les étapes c) et d), une étape c') de séchage de l'ensemble moule / textile / élastomère obtenu à l'issue de l'étape c).

11. Procédé selon l'une quelconque des revendications 8 à 10, **caractérisé en ce que** l'étape b) ne comprend qu'une seule opération de trempage de l'ensemble moule / textile dans une dispersion aqueuse d'élastomère.

12. Utilisation du gant selon l'une quelconque des revendications 1 à 7 pour la manipulation d'objets entraînant un risque de coupure, de perforation ou de déchirure.

13. Utilisation du gant selon la revendication 3 pour la manipulation de produits chimiques dangereux, tels que des produits chimiques agressifs.

## Claims

1. Glove which comprises, from the inside face of the glove to the outside face:
- a textile layer having high mechanical strength made of woven or knitted natural or synthetic fibres,
- said textile layer being covered, over a portion or over the whole of its surface, with at least one layer of an elastomer obtained from an aqueous dispersion of said elastomer,
- said elastomer layer being covered, over a portion or over the whole of its surface, with at least one layer of an elastomer obtained from a solution of said elastomer in one or more organic solvents or in water,
**characterised in that**:
- said textile having high mechanical strength comprises fibres selected from fibres of polyaramid, polyamide, viscose and their mixtures and DYNEEMA^{™},
- said elastomer obtained from an aqueous dispersion is selected from the group constituted by the polyurethanes,
- said elastomer obtained from a solution in one or more organic solvents or in water is selected from the group constituted by the polyurethanes.

2. Glove according to claim 1, **characterised in that** said elastomer obtained from a solution in one or more organic solvents or in water is selected from the polyurethanes having a modulus at 20% elongation of less than 3 MPa, a modulus at 100% elongation of less than 7 MPa, a tear strength of greater than 20 MPa and an elongation at break of greater than 400%.

3. Glove according to either claim 1 or claim 2, **characterised in that** it further comprises at least one layer of an elastomer obtained from a solution in one or more organic solvents or in water selected from the group constituted by the butyl rubbers, the chlorosulfonated polyethylenes, the polyvinyl alcohols and their mixtures.

4. Glove according to any one of the preceding claims, **characterised in that** the total thickness of the elastomer layers is from 0.1 to 1 mm, preferably from 0.1 to 0.6 mm.

5. Glove according to any one of the preceding claims, **characterised in that** it has a puncture strength, measured in accordance with standard NF EN 388, of at least 150 N.

6. Glove according to any one of the preceding claims, **characterised in that** it has a trouser tear strength of at least 75 N, measured in accordance with standard NF EN 388.

7. Glove according to any one of the preceding claims, **characterised in that** it has an abrasion resistance of 4 according to standard NF EN 388.

8. Process for the production of the glove as defined in any one of the preceding claims, **characterised in that** it comprises the following steps:
a) covering a mould with a textile layer having high mechanical strength made of woven or knitted natural or synthetic fibres,
b) immersing the mould/textile assembly in one or more aqueous dispersions of polyurethane elastomers,
c) immersing the mould/textile/elastomer assembly obtained following the preceding step in one or more solutions of polyurethane elastomers in one or more organic solvents or in water, and then
d) removing the glove by sliding it off the mould.

9. Process according to claim 8, **characterised in that** it comprises, between steps a) and b), a step a') of immersing the mould/textile assembly in a bath of coagulating agent, followed by partial drying of said assembly.

10. Process according to claim 8 or claim 9, **characterised in that** it comprises, between steps c) and d), a step c') of drying the mould/textile/elastomer assembly obtained following step c).

11. Process according to any one of claims 8 to 10, **characterised in that** step b) comprises only one operation of immersing the mould/textile assembly in an aqueous elastomer dispersion.

12. Use of the glove according to any one of claims 1 to 7 for handling objects entailing a risk of cutting, puncturing or tearing.

13. Use of the glove according to claim 3 for handling dangerous chemical products, such as aggressive chemical products.

## Patentansprüche

1. Handschuh, der von der Innenseite des Handschuhs zur Außenseite umfasst:
- eine Textillage mit hoher mechanischer Festigkeit aus natürlichen oder synthetischen Fasern, die gewebt oder gestrickt sind,
- wobei die Textillage an einem Teil oder der Gesamtheit ihrer Oberfläche von wenigstens einer Schicht eines Elastomers bedeckt ist, die durch eine wässrige Dispersion des Elastomers hergestellt ist,
- die Elastomerschicht an einem Teil oder der Gesamtheit ihrer Oberfläche von wenigstens einer Schicht eines Elastomers bedeckt ist, die durch eine Lösung des Elastomers in einem oder mehreren organischen Lösungsmittel(n) oder in Wasser hergestellt ist, **dadurch gekennzeichnet, dass**:
- die Textilie mit hoher mechanischer Festigkeit aus Fasern besteht, die unter Fasern von Polyaramid, Polyamid, Viskose und deren Gemischen und DYNEEMA^{™} ausgewählt sind,
- das Elastomer, das aus einer wässrigen Dispersion erhalten wird, aus der Gruppe, bestehend aus Polyurethanen, ausgewählt ist,
- das Elastomer, erhalten aus einer Lösung in einem organischen Lösungsmittel oder mehreren organischen Lösungsmitteln oder in Wasser, aus der Gruppe, bestehend aus Polyurethanen, ausgewählt ist.

2. Handschuh nach Anspruch 1, **dadurch gekennzeichnet, dass** das Elastomer, das aus einer Lösung in einem oder mehreren organischen Lösungsmittel(n) oder in Wasser erhalten wird, unter Polyurethanen ausgewählt ist, die einen Modul bei 20% Dehnung von unter 3 MPa, einen Modul bei 100% Dehnung von unter 7 MPa, eine Reißfestigkeit von über 20 MPa und eine Reißdehnung von über 400% haben.

3. Handschuh nach einem der Ansprüche 1 und 2, **dadurch gekennzeichnet, dass** er außerdem wenigstens eine Schicht eines Elastomers, erhalten aus einer Lösung in einem oder mehreren organischen Lösungsmittel(n) oder Wasser, ausgewählt aus der Gruppe, bestehend aus Butylkautschuken, chlorsulfonierten Polyethylenen, Polyvinylalkoholen und ihren Gemischen, umfasst.

4. Handschuh nach einem der vorangehenden Ansprüche, **dadurch gekennzeichnet, dass** die Gesamtdicke der Elastomerschichten zwischen 0,1 und 1 mm, vorzugsweise zwischen 0,1 und 0,6 mm, liegt.

5. Handschuh nach einem der vorangehenden Ansprüche, **dadurch gekennzeichnet, dass** er eine Perforationsfestigkeit, gemessen gemäß der Norm NF EN 388 von mindestens 150 N aufweist.

6. Handschuh nach einem der vorangehenden Ansprüche, **dadurch gekennzeichnet, dass** er eine Beständigkeit gegenüber dem Fingerreißen von wenigstens 75 N, gemessen gemäß der Norm NF EN 388, aufweist.

7. Handschuh nach einem der vorangehenden Ansprüche, **dadurch gekennzeichnet, dass** er eine Abriebbeständigkeit mit einem Wert von 4 gemäß der Norm NF EN 388 aufweist.

8. Verfahren zur Herstellung des Handschuhs, wie er in einem der vorangehenden Ansprüche definiert ist, **dadurch gekennzeichnet, dass** es die folgenden Stufen umfasst:
a) Ausstatten einer Form mit einer Textillage mit hoher mechanischer Festigkeit aus natürlichen oder synthetischen Fasern, die gewebt oder gestrickt sind,
b) Eintauchen der Kombination Form/Textilie in eine oder mehrere wässrige Dispersion(en) von Polyurethanelastomeren,
c) Eintauchen der Kombination Form/Textilie/Elastomer, die aus der vorherigen Stufe erhalten wurde, in eine oder mehrere Lösungen von Polyurethanelastomeren in einem oder mehreren organischen Lösungsmittel(n) oder in Wasser, dann
d) Abziehen des Handschuhs durch Gleiten auf der Form.

9. Verfahren nach Anspruch 8, **dadurch gekennzeichnet, dass** es zwischen den Stufen a) und b) eine Stufe a') des Eintauchens der Kombination Form/Textilie in ein Bad eines Koagulierungsmittels, gefolgt von einer partiellen Trocknung der Kombination umfasst.

10. Verfahren nach Anspruch 8 oder Anspruch 9, **dadurch gekennzeichnet, dass** es zwischen den Stufen c) und d) eine Stufe c') der Trocknung der Kombination Form/Textilie/ Elastomer, die aus Stufe c) erhalten wurde, umfasst.

11. Verfahren nach einem der Ansprüche 8 bis 10, **dadurch gekennzeichnet , dass** die Stufe b) nur einen Eintauchvorgang der Kombination Form/Textilie in eine wässrige Elastomerdispersion umfasst.

12. Verwendung des Handschuhs nach einem der Ansprüche 1 bis 7 für die Handhabung von Gegenständen, die ein Risiko eines Schneidens, einer Perforation oder eines Reißens mit sich bringt.

13. Verwendung des Handschuhs nach Anspruch 3 für die Handhabung von gefährlichen chemischen Produkten wie aggressiven chemischen Produkten.
